# EUROPÄISCHE PATENTSCHRIFT

(11) **EP 2 179 497 B1**
(45) Veröffentlichungstag und Bekanntmachung des Hinweises auf die Patenterteilung: **20.11.2013**
(21) Anmeldenummer: 08801472.5
(22) Anmeldetag: 20.06.2008
(51) Int. Cl.: G05B 19/19, H02P 5/52, H02P 5/74

(54) **Anlage und Verfahren zur Lageregelung von zumindest zwei Antrieben**
System and method for position controlling of at least two drives
Système et procédé pour contrôler la position d'au moins deux actionneurs

(30) Priorität: 17.07.2007 DE 102007033653
(43) Veröffentlichungstag der Anmeldung: 28.04.2010
(73) Patentinhaber: SEW-EURODRIVE GmbH & Co. KG, 76646 Bruchsal (DE)
(72) Erfinder: HAMMEL, Wolfgang, 76646 Bruchsal (DE); SCHUSTER, Thomas, 73113 Ottenbach (DE)
(86) Internationale Anmeldenummer: PCT/EP2008/004984
(87) Internationale Veröffentlichungsnummer: WO 2009/010147

(56) Entgegenhaltungen:
- EP-A- 1 143 315
- EP-A- 1 455 438
- DE-A1- 4 100 064
- JP-A- 8 289 581

## Beschreibung

Die Erfindung betrifft eine Anlage und ein Verfahren zur Lagereglung von zumindest zwei Antrieben.

Aus der Veröffentlichung SPS/IPC/DRIVES 2006, VDE-Verlag Berlin, ist aus Seite 523 bis 531, insbesondere Seite 527, eine Drehmomentkopplung über EtherCAT für Master-Slave-Antriebe bekannt.

**Aus der** JP 08 289581 A **ist ein Antreiben einer Last bekannt, die von mehreren Antrieben angetrieben wird.**

**Aus der** EP 1 143 315 A **ist ein Servocontroller bekannt.**

**Aus der** DE 41 00 064 A1 **ist ein Verfahren zur Vermeidung eines Reset-Windup-Effekts bei einer Regelschaltung bekannt.**

Der Erfindung liegt daher die Aufgabe zugrunde, eine Anlage und ein Verfahren weiterzubilden, wobei eine Lagesynchronität weitergebildet werden soll.

Erfindungsgemäß wird die Aufgabe bei der Anlage nach den in Anspruch 1 und bei dem Verfahren nach den in Anspruch 7 angegebenen Merkmalen gelöst.

Wichtige Merkmale der Erfindung bei der Anlage sind, dass sie zumindest zwei geregelte Antriebe, insbesondere umfassend einen umrichtergespeisten Elektromotor, umfasst,
wobei jeder Antrieb einen von einem Regelkreis umfassten Regler umfasst, dem eine Eingangsgröße zuführbar ist,
wobei Mittel zum Eingeben eines Sollwerts vorgesehen sind, die mit jeweiligen Sollwertbegrenzern verbunden sind,
wobei Mittel zum Bestimmen der dem gleichen Zeitschritt zugehörigen Istwerte vorgesehen sind,
und wobei Mittel zum Zuführen der Istwerte an einen jeweiligen Ausgleichsregler vorgesehen sind, wobei Mittel zum Aufaddieren dessen Ausgangswerts auf den Ausgangswert des jeweiligen Sollwertbegrenzers vorgesehen sind und zum Zuführen des Ergebnisses dem Regler als Eingangsgröße vorgesehen sind.

Von Vorteil ist dabei, dass ein lagesynchroner Betrieb zweier Antriebe ermöglicht ist, insbesondere in jedem Betriebspunkt. Ganz besonders gilt dies auch bei Betriebspunkten im Grenzbereich des erlaubten Wertebereichs. Wenn also einer der Antriebe seine Stellgrenze erreicht, nehmen die anderen Antriebe in der Weise Rücksicht darauf, dass sie den ihnen möglichen Stellbereich ihrer Stellgröße nicht voll ausnutzen sondern den Stellwert so bemessen, dass Lagesynchronität auch bei einem solchem Betriebspunkt erhalten bleibt.

Somit sind die Antriebe sogar an einer gleichen Welle betreibbar, also die Abtriebswellen solcher Antriebe auf ein und derselben Welle zusammenführbar, ohne dass störend große Torsion auftritt.

**Erfindungsgemäß** ist der Regler ein Drehzahlregler, insbesondere wobei der Istwert die Winkellage einer Welle, insbesondere Rotorwelle des Elektromotors, des Antriebs oder die daraus abgeleitete Drehzahl ist. Von Vorteil ist dabei, dass ein einfacher Winkelsensor zur Erfassung der Istlage ausreicht. Außerdem wird als Stellgröße im mathematischen Modell des Reglers ein Drehmoment verwendbar. Bei der Realisierung ist der Regler derart ausgeführt, dass er über das geeignete Ansteuern der Schaltzeitpunkte von pulsweitenmoduliert angesteuerten Leistungshalbleitern die Motorspannung steuert, die den Motor versorgt und somit den Motorstrom bewirkt, der im Wesentlichen dem Drehmoment entspricht. Der Winkelsensor ist mit der Rotorwelle verbindbar und meldet somit die Istwerte an den Regler, wobei aus den Lageistwerten Drehzahlistwerte bestimmt werden. Außerdem ist der Lageistwert für die erfindungsgemäße lagesynchrone Regelung verwendbar.

Bei einer vorteilhaften Ausgestaltung sind die Antriebe mit Datenübertragungsmitteln verbunden, wobei jeder Antrieb Verzögerungsmittel umfasst zur Erzeugung der Istwerte des gleichen Zeitschritts. Von Vorteil ist dabei, dass keine Instabilitäten auftreten und somit die zeitsynchronen Werte von der erfindungsgemäßen Regelung verwendet werden.

Bei einer vorteilhaften Ausgestaltung ist die Anlage derart ausgeführt, dass der Regler zu jedem Zeitschritt den maximal und minimal vorgebbaren Wert der Eingangsgröße bestimmt, insbesondere wobei der Stellwert die Stellgrenze, insbesondere oberer und unterer Stellgrenzwert, nicht überschreitet, insbesondere wobei Zustandsgrößen des Reglers, wie Integrieranteil, Istwert, Stellgrenze und dergleichen, berücksichtigt werden. Von Vorteil ist dabei, dass bestimmt wird, in welchen Bereich der Stellwert im nächsten Zeitschritt gelegt werden darf.

Bei einer vorteilhaften Ausgestaltung ist die Anlage derart ausgeführt, dass zu jedem Zeitschritt der vom Regler bestimmte, maximal und minimal vorgebbare Wert der Eingangsgröße an zumindest einen Sollwertbegrenzer zumindest eines anderen Antriebs übermittelt wird. Von Vorteil ist dabei, dass die Sollwertbegrenzung unter Berücksichtigung nicht nur des eigenen für den nächsten Zeitschritt erlaubten Stellbereichs sondern auch unter Berücksichtigung der verbundenen Antriebe ausführbar ist. Somit nimmt der Antrieb in gewissen Betriebspunkten nur einen kleineren Stellbereich in Anspruch als er ohne Berücksichtigung der anderen Antriebe in Anspruch nehmen könnte. Ein solcher Betriebspunkt ist beispielsweise dann gegeben, wenn einer der verbundenen Antriebe an seiner Stellgrenze ist und somit seinen Stellwert nicht in der eigentlich zum Ausregeln der Regelabweichung notwendigen Weise verändern kann. In diesem Fall verringern dann die anderen Antriebe ihren Stellwertbetrag entsprechend, so dass die Lagesynchronität weiter gegeben ist. Insgesamt ist dabei beispielsweise das auf die mit den Abtriebswellen verbundene gemeinsame Welle wirkende Gesamt-Drehmoment verringert.

**Erfindungsgemäß** begrenzt der jeweilige Sollwertbegrenzer hierzu den Sollwert derart, dass der Ausgangswert des Sollwertbegrenzers
- den kleineren aller dem Sollwertbegrenzer zugeführten maximal vorgebbaren Werte nicht überschreitet und
- den größeren aller dem Sollwertbegrenzer zugeführten minimal vorgebbaren Werte nicht unterschreitet.

Von Vorteil ist dabei, dass alle diejenigen Antriebe berücksichtigt werden, die zum Datenaustausch verbunden sind und die maximal beziehungsweise minimal vorgebbaren Werte jeweils ermitteln und dann übermitteln.

Bei einer vorteilhaften Ausgestaltung sind vom Sollwertbegrenzer Mittel zum Prädiktieren für alle diejenigen dem Sollwertbegrenzer zugeführten Werte vorgesehen, die mittels der Datenübertragungsmittel zugeführt sind. Von Vorteil ist dabei, dass die dem Lageausgleichsregler und die dem Sollwertbegrenzer zugeführten Werte zum gleichen Zeitschritt gehören und somit Instabilitäten vermeidbar sind.

Bei einer vorteilhaften Ausgestaltung umfasst der Regelkreis den Regler und eine Regelstrecke, die den Elektromotor umfasst, wobei mittels eines Winkelsensors die Istlage einer Welle des Antriebs, insbesondere Rotorwelle, erfasst wird. Von Vorteil ist dabei, dass die Erfindung auf eine Anlage anwendbar ist, deren Antriebe umrichtergespeiste Elektromotoren mit Winkelsensor umfassen.

Wichtige Merkmale der Erfindung bei dem Verfahren sind, dass es zum Lageregeln von Antrieben einer Anlage vorgesehen ist,
die zumindest zwei geregelte Antriebe umfasst, insbesondere umfassend eine umrichtergespeisten Elektromotor,

wobei in jedem Antrieb ein von einem Regelkreis umfasster Regler umfasst ist, dem eine Eingangsgröße zugeführt wird,
wobei ein Sollwert jeweiligen Sollwertbegrenzern der Antriebe vorgegeben wird,
wobei die dem gleichen Zeitschritt zugehörigen Istwerte einem jeweiligen Ausgleichsregler zugeführt werden, dessen Ausgangswert dem Ausgangswert des jeweiligen Sollwertbegrenzers aufaddiert wird und das Ergebnis dem Regler als Eingangsgröße zugeführt wird.

Von Vorteil ist dabei, dass in einfacher Weise die Lagesynchronität erreicht wird, insbesondere auch für Betriebspunkte, bei denen einer der Antriebe im Bereich seiner Stellgrenze arbeitet.

Bei einer vorteilhaften Ausgestaltung werden die von Datenübertragungsmitteln übertragenen Istwerte Verzögerungsmitteln zugeführt zur Erzeugung der Istwerte aus dem gleichen Zeitschritt. Von Vorteil ist dabei, dass Instabilitäten vermieden werden.

Bei einer vorteilhaften Ausgestaltung bestimmt der Regler zu jedem Zeitschritt den maximal und minimal vorgebbaren Wert der Eingangsgröße, insbesondere wobei der Stellwert die Stellgrenze, insbesondere oberer und unterer Stellgrenzwert, nicht überschreitet, insbesondere wobei Zustandsgrößen des Reglers, wie Integrieranteil, Istwert, Stellgrenze und dergleichen, berücksichtigt werden. Von Vorteil ist dabei, dass sogar Zustandsgrößen berücksichtigbar sind und somit ein genauer Bereich zwischen maximal und minimal erlaubtem Wert der Eingangsgröße bestimmbar ist, in welchem die Eingangsgröße liegen darf, ohne dass die Stellgrenze überschritten wird.

Bei einer vorteilhaften Ausgestaltung wird zu jedem Zeitschritt der vom Regler bestimmte, maximal und minimal vorgebbare Wert der Eingangsgröße an zumindest einen Sollwertbegrenzer zumindest eines anderen Antriebs übermittelt. Von Vorteil ist dabei, dass der Antrieb Rücksicht nimmt auf andere Antriebe, deren Stellwert die Stellgrenze erreichen können, indem der zulässige Bereich für den Stellwert im nächsten Zeitschritt entsprechend beschränkt wird unter Berücksichtigung aller übermittelten minimalen und maximalen Werte des eigenen und der anderen Antriebe.

Bei einer vorteilhaften Ausgestaltung werden alle diejenigen dem Sollwertbegrenzer zugeführten Werte prädiktiert, die mittels der Datenübertragungsmittel zugeführt sind. Von Vorteil ist dabei, dass Instabilitäten vermieden werden.

Bei einer vorteilhaften Ausgestaltung umfasst der Regelkreis den Regler und eine Regelstrecke, die den Elektromotor umfasst, wobei mittels eines Winkelsensors die Istlage einer Welle des Antriebs, insbesondere Rotorwelle, erfasst wird. Von Vorteil ist dabei, dass die Regelgröße eine Drehzahl, der Istwert die Lage und als Stellgröße beispielsweise ein Drehmoment, eine Motorspannung oder dergleichen vorsehbar ist.

### Bezugszeichenliste

- 1: Drehzahlregler
- 2: Proportionalglied
- 3: Begrenzer
- 4: Lageausgleichsregler
- 5: Datenübertragungskomponenten
- 20: Lageausgleichsregler
- 21: Verzögerungsglied
- 22: Sollwertbegrenzer
- 25: Datenübertragungskomponenten

- n_Soll: Drehzahlsollwert

- β_Ist1: Lage-Istwert des ersten Antriebs
- β_Ist2: Lage-Istwert des zweiten Antriebs
- n_max1: maximaler Drehzahlwert des ersten Antriebs
- n_max2: maximaler Drehzahlwert des zweiten Antriebs
- n_min1: minimaler Drehzahlwert des ersten Antriebs
- n_min2: minimaler Drehzahlwert des zweiten Antriebs
- n_SollLim1: begrenzter Sollwert des ersten Antriebs
- n_SollLim2: begrenzter Sollwert des zweiten Antriebs

Die Erfindung wird nun anhand von Abbildungen näher erläutert:

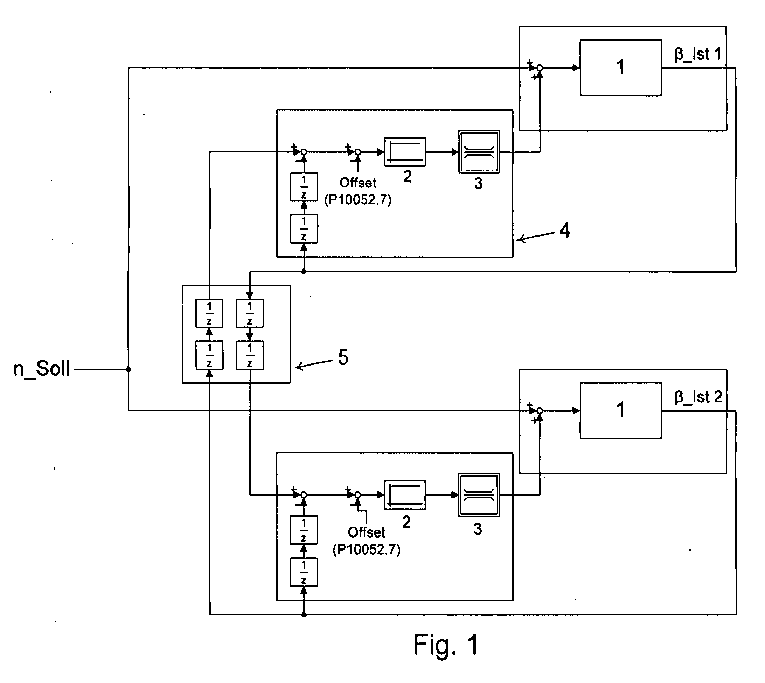

In der Figur 1 ist eine erstes Ausführungsbeispiel schematisch gezeigt.

Dabei sind zwei Antriebe, umfassend jeweils einen umrichtergespeisten Elektromotor mit oder ohne Getriebe lagesynchron zu betreiben. Die abtriebsseitigen Wellen der Antriebe sind mechanisch gekoppelt, beispielsweise mit der gleichen Welle verbunden oder über eine weitere Komponente in mechanischer Verbindung.

Beide Umrichter umfassen jeweils eine elektronische Schaltung, die mittels Datenübertragungskomponenten 5 zum Datenaustausch miteinander verbunden sind. Dabei werden die Daten nur zeitverzögert empfangbar und verwertbar von der empfangenden elektronischen Schaltung. In Figur 1 ist die zugehörige Zeitverzögerung mit zwei 1/z-Gliedern, also zwei Zeitschritten, gekennzeichnet.

Die beiden Antriebe sind nicht als hierarchisch verschiedene Antriebe für die erfindungsgemäßen Zwecke angeordnet, wie beispielsweise Master-Slave-Antriebe, sondern als gleichwertig. Vorteiligerweise ergibt sich hierdurch eine symmetrische Anordnung.

Jeder Antrieb umfasst daher einen Drehzahlregler 1, dem ein drehzahlwertiger Sollwert zugeführt wird, wobei der vorgebbare Drehzahlsollwert n_Soll um einen zusätzlichen Drehzahl-Wert erhöht oder erniedrigt wird.

Dieser zusätzliche Drehzahl-Wert wird von einem Lageausgleichsregler bestimmt, dessen Eingang ein Lage-Istwert β_Ist1 des ersten Antriebs und ein Lage-Istwert β_Ist2 des zweiten Antriebs zugeführt wird. Dabei ist einer der beiden Lage-Istwerte mittels der Datenübertragungskomponenten 5 zugeführt und der andere mittels eines Verzögerungsgliedes in gleichartiger Weise zeitverzögert zugeführt. Somit sind die beiden Werte dem jeweils gleichen Zeitschritt zugeordnet, in welchem sie also aktuell waren. In Figur 1 beträgt diese Zeitverzögerung zwei Zeitschritte, gekennzeichnet durch zwei in Reihe geschaltete 1/z Verzögerungsglieder.

Die Differenz der beiden Werte wird einem Proportionalglied 2 zugeführt und dessen Ausgang einem Begrenzer 3 mit vorgebbarem Begrenzungswert zugeleitet.

Auf diese Weise wird also der dem Drehzahlregler 1 des ersten Antriebs vorgegebene Sollwert n_Soll um den Ausgangswert des Lageausgangsreglers 4 erniedrigt, wenn die Welle des ersten Antriebs vorauseilt. Entsprechend um den gleichen Betrag wird der dem Drehzahlregler 1 des zweiten Antriebs vorgegebene Sollwert n_Soll um den gleichen Ausgangswert erhöht, um das entsprechende Nacheilen der Welle des zweiten Antriebs zu vermindern.

Auf diese Weise ist eine Lagesynchronität der Wellen der beiden Antriebe erreichbar.

In weiteren erfindungsgemäßen Ausführungsbeispielen sind statt zwei Antrieben drei oder mehr Antriebe in entsprechender Weise angeordnet. Dabei werden dem jeweiligen Lageausgleichregler die Differenz des eigenen Lageistwerts zum Lageistwert des nächsten Antriebs zugeführt, wobei beim letzten die Differenz des eigenen Lageistwertes zum Lageistwert des ersten Antriebs zugeführt wird. In weiteren Ausführungsbeispielen wird dem Lageausgleichsregler statt der Differenz zweier Lageistwerte die Differenz des eigenen LageIstwertes zum Mittelwert der Lage-Istwerte zugeführt. Dabei muss allerdings der eigene Lage-Istwert oder eine entsprechende Information auch jedem Antrieb übermittelt werden.

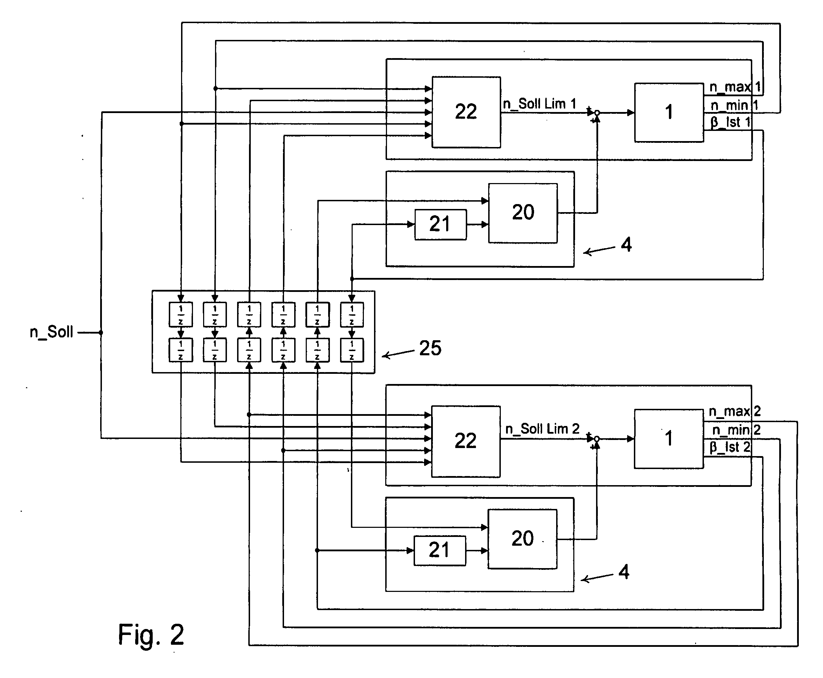

In Figur 2 ist ein weiter verfeinertes und verbessertes erfindungsgemäßes Ausführungsbeispiel dargestellt.

Jeder Antrieb umfasst wiederum einen Drehzahlregler 1, dem ein drehzahlwertiger Sollwert zugeführt wird, wobei der vorgebbare Drehzahlsollwert n_Soll einem Sollwertbegrenzer 22 zugeführt wird und dessen Ausgangswert n_SollLim1 des ersten Antriebs beziehungsweise n_SollLim2 des zweiten Antriebs um einen zusätzlichen Drehzahl-Wert erhöht oder erniedrigt wird.

Dieser zusätzliche Drehzahl-Wert wird von einem Lageausgleichsregler 4 bestimmt, dessen Eingang ein Lage-Istwert β_Ist1 des ersten Antriebs und ein Lage-Istwert β_Ist2 des zweiten Antriebs zugeführt wird. Dabei ist einer der beiden Lage-Istwerte mittels der Datenübertragungskomponenten 25 zugeführt und der andere mittels eines Verzögerungsgliedes 21 in gleichartiger Weise zeitverzögert zugeführt. Somit sind die beiden Werte dem jeweils gleichen Zeitschritt zugeordnet, in welchem sie also aktuell waren. In Figur 2 beträgt diese Zeitverzögerung jeweils zwei Zeitschritte, gekennzeichnet durch zwei in Reihe geschaltete 1/z Verzögerungsglieder.

Die Differenz der beiden Werte wird einem Lageausgleichsregler 20 zugeführt und dessen Ausgangsgröße auf die Ausgangsgröße n_sollLim1 des Sollwertbegrenzers 22 addiert und dann dem Drehzahlregler 1 als Eingangsgröße zugeführt.

Der Lageausgleichsregler 20 ist in einem ersten erfindungsgemäßen Ausführungsbeispiel als P-Regler ausgeführt. In anderen erfindungsgemäßen Ausführungsbeispielen ist aber auch eine Ausführung als anderer linearer Regler, wie PI oder PID Regler, ausführbar, insbesondere mit oder ohne Vorsteuerwert.

Bei der Ausführung nach Figur 2 bestimmt der Regler nicht nur den Wert seiner Stellgröße und bewirkt somit die Istlage sondern er bestimmt auch den maximalen und minimal erlaubten Wert für Drehzahlsollwertvorgabe, wobei er den Ausgangswert des Lageausgleichsreglers 20 ebenso berücksichtigt, wie den vom Begrenzer 22 begrenzten Drehzahlsollwert Wert n_SollLim1 beziehungsweise n_SollLim2. Dabei berücksichtigt er auch seinen internen Parameter, wie beispielsweise den aktuellen Inhalt des Integrieranteils seiner Regelstruktur. Durch diese Prognostizierung des erlaubten Bereiches an Werten für die Drehzahlsollwertvorgabe, für die die Stellgrenze noch nicht erreicht wird, ist für den anderen Antrieb eine Grundlage gegeben, den Arbeitspunkt des ersten Antriebs zu berücksichtigen. Denn der jeweilige Sollwertbegrenzer 22 weist als Eingangsgröße die maximal und minimal erlaubten Werte für die Drehzahlsollwertvorgabe beider Antriebe auf und den Drehzahlsollwert n_Soll.

Der Sollwertbegrenzer 22 begrenzt daher den Drehzahlsollwert n_Soll derart, dass er auf jeden Fall kleiner ist als alle maximalen und größer ist als alle minimalen Werte für die Drehzahlsollwertvorgabe aller Antriebe, also n_max1, n_max2, n_min1, n_min2. Auf diese Weise wird verhindert, dass einer der Drehzahlregler 1 der Antriebe seine Stellgrenze überschreitet.

Somit wird also der dem Drehzahlregler 1 des ersten Antriebs vorgegebene Sollwert n_Soll zunächst begrenzt und dann um den Ausgangswert des Lageausgangsreglers 4 erniedrigt, wenn die Welle des ersten Antriebs vorauseilt. Entsprechend um den gleichen Betrag wird der dem Drehzahlregler 1 des zweiten Antriebs vorgegebene Sollwert n_Soll um den gleichen Ausgangswert erhöht, um das entsprechende Nacheilen der Welle des zweiten Antriebs zu vermindern.

Die Begrenzung ist aber derart ausgeführt, dass der stärkere Antrieb auf den schwächeren Antrieb Rücksicht nimmt. Beispielsweise wirkt auf den zweiten ein plötzlich auftretendes Bremsmoment ein, so dass zwar der Drehzahlregler seine Stellgröße, beispielsweise Motorstrom, auf den höchsten Wert stellt, aber trotzdem kein ausreichendes Drehmoment vom Elektromotor erzeugbar ist zur Erreichung der genügend hohen Drehzahl. In diesem Fall reduziert der ungestörte Antrieb sein Drehmoment, indem er seinen Stellbereich für die Stellgröße reduziert, also die Drehzahl entsprechend ebenfalls reduziert.

Also bleibt die Lagesynchronität sogar dann erhalten, wenn einer der Antriebe mit Bremsmoment zusätzlich belastet wird.

Auf diese Weise ist eine Lagesynchronität der Wellen der beiden Antriebe erreichbar.

Da die Datenübertragungskomponenten die Werte zeitlich verzögern, werden mit den Verzögerungsgliedern 21 wiederum zeitlich synchrone Werte erzeugbar, wie auch im Beispiel aus Figur 1.

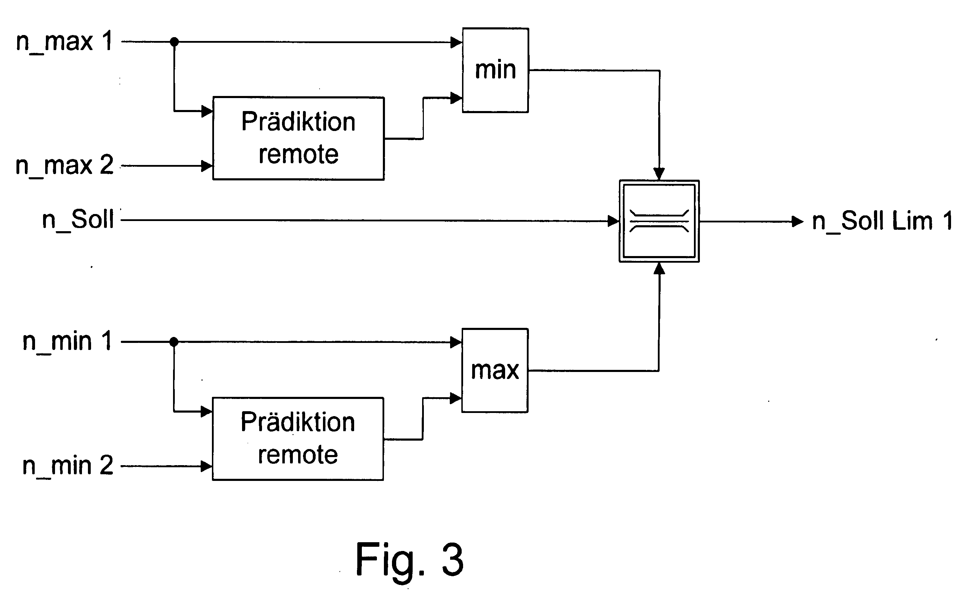

Figur 3 zeigt den Sollwertbegrenzer 22 des ersten Antriebs in näheren Einzelheiten. Dabei werden die maximal und minimalen Drehzahlwerte (n_max2, n_min2) des zweiten Antriebs prädiktiert um eine Zeitbetrag, welcher der Verzögerungszeit durch die Datenübertragungsmittel entspricht. Von diesen prädiktierten Werten und den entsprechenden maximalen und minimalen Drehzahlwerten (n_max1, n_min1) des ersten Antriebs werden das Minimum beziehungsweise das Maximum bestimmt und einem Begrenzer zugeführt, der auf dieses Minimum der maximalen Drehzahlwerte und dieses Maximum der minimalen Wert den Drehzahlsollwert n_Soll begrenzt auf den begrenzten Sollwert n_SollLim1 des ersten Antriebs.

Die Prädiktion erfolgt dabei vorzugsweise linear, wobei dem aktuellen Wert ein Differenzwert aufaddiert wird, wobei die Differenz proportional ist der Differenz des aktuellen Wertes und dem Wert des vorangegangenen Zeitschrittes.

Analog funktioniert der Sollwertbegrenzer 22 des zweiten Antriebs, der den Drehzahlsollwert n_Soll begrenzt auf den begrenzten Sollwert n_SollLim2 des zweiten Antriebs.

Auf diese Weise sind die Drehzahlsollwerte derart begrenzt, dass der Antrieb mit dem höheren Drehmomentbedarf genau an der Drehmomentstellgrenze fährt.

Der Lageausgleichsregler arbeitet also stets sinnvoll, weil die Antriebe sich nie außerhalb ihrer jeweiligen Stellgrenze befinden. Die Stellgröße des Lageausgleichreglers kommt also stets voll zur Wirkung und die Lageausregelung ist ständig funktionsfähig in vollem Umfang.

Zu jedem Zeitschritt wiederholend wird als bei der Erfindung derjenige Grenzwert für Drehzahl ermittelt, der zum maximal möglichen Stellgrößenwert, also Drehmomentwert, gehört. Ebenso wird der zum minimalen Stellgrößenwert gehörende Drehzahlgrenzwert ermittelt. Bei der Ermittelung werden die Art und der Zustand des Regler berücksichtigt, also beispielsweise Zustandsgrößen des Reglers, wie Integrieranteil, Istwert, Stellgrenze und dergleichen, wodurch sich die ermittelten Grenzwerte ständig ändern. Wie oben beschrieben, werden die jeweils ermittelten Grenzwerte für Drehzahl an alle anderen Antriebe ebenso übermittelt wie die Lage-Istwerte

Es wird also zu jedem Zeitschritt der maximal und minimal vorgebbare Wert der Eingangsgröße des Reglers bestimmt und der Stellwert überschreitet die Stellgrenze, also den oberen Stellgrenzwert, nicht. Genauso unterschreitet der Stellwert die Stellgrenze nach unten nicht, also unterschreitet den unteren Stellgrenzwert nicht.

In weiteren erfindungsgemäßen Ausführungsbeispielen sind statt zwei Antrieben drei oder mehr Antriebe in entsprechender Weise angeordnet. Dabei werden dem jeweiligen Lageausgleichregler die Differenz des eigenen Lageistwerts zum Lageistwert des nächsten Antriebs zugeführt, wobei beim letzten die Differenz des eigenen Lageistwertes zum Lageistwert des ersten Antriebs zugeführt wird. In weiteren Ausführungsbeispielen wird dem Lageausgleichsregler statt der Differenz zweier Lageistwerte die Differenz des eigenen Lage-Istwertes zum Mittelwert der Lage-Istwerte zugeführt. Dabei muss allerdings der eigene Lage-Istwert oder eine entsprechende Information auch jedem Antrieb übermittelt werden.

## Patentansprüche

1. Anlage, umfassend zumindest zwei geregelte Antriebe, umfassend je einen umrichtergespeisten Elektromotor,
wobei jeder Antrieb und einen jeweils dazugehörigen Drehzahlregler (1) von einem Regelkreis umfasst ist, wobei dem Drehzahlregler (1) eine Eingangsgröße zuführbar ist,
wobei Mittel zum Eingeben eines Drehzahl-Sollwerts (n_Soll) vorgesehen sind, die mit jeweiligen Sollwertbegrenzern (22) verbunden sind,
wobei Mittel zum Bestimmen der dem gleichen Zeitschritt zugehörigen Lage-Istwerte (β_Ist1, β_Ist2) aller Antriebe vorgesehen sind,
**dadurch gekennzeichnet, dass**
Mittel zum Zuführen der Lage-Istwerte (β_Ist1, β_Ist2) aller Antriebe an einen jeweiligen Lageausgleichsregler (20) vorgesehen sind, wobei die zum jeweiligen Antrieb gehörenden Lage_Istwerte (β_Ist1, β_Ist2) über Verzögerungsglieder (21) zeitverzögert zugeführt werden, wobei Mittel zum Aufaddieren des Ausgangswerts des jeweiligen Lageausgleichsreglers (20) auf den Ausgangswert des jeweiligen Sollwertbegrenzers (22) vorgesehen sind und zum Zuführen des Ergebnisses dem Drehzahlregler (1) als Eingangsgröße vorgesehen sind,
**wobei der jeweilige Sollwertbegrenzer** (22) als Eingangsgrößen die maximal (n_max1, n_max2) und minimal **(n_min1, n_min2) erlaubten Werte für die Drehzahlsollwertvorgabe aller Antriebe und den Drehzahlsollwert (n_Soll) aufweist,**
**wobei der jeweilige Sollwertbegrenzer (22) den Drehzahl-Sollwert (n_Soll) derart begrenzt, dass der Ausgangswert (n_sollLim1, n_sollLim2) des Sollwertbegrenzers** (22)
- **den kleineren aller dem Sollwertbegrenzer (22) zugeführten maximal vorgebbaren Werte (n_max1, n_max2) nicht überschreitet und**
- **den größeren aller dem Sollwertbegrenzer (22) zugeführten minimal vorgebbaren Werte (n_min1, n_min2) nicht unterschreitet,**
**wobei die Antriebe sich gegenseitig die zum jeweiligen Antrieb gehörenden Eingangsgrößen der Sollwertbegrenzer (22) und der Lageausgleichsregler (20) über eine Datenübertragungskomponente (25) zeitverzögert übertragen zuführen, so dass die Werte der zeitverzögert zugeführten Größen dem gleichen Zeitschritt zugeordnet sind und die Drehzahlregler (1) der Antriebe entsprechende Eingangsgrößen erhalten.**

2. Anlage nach Anspruch 1,
**dadurch gekennzeichnet, dass**
der Istwert (β_Ist1, β_Ist2) die Winkellage einer Welle, insbesondere Rotorwelle des Elektromotors, des Antriebs oder die daraus abgeleitete Drehzahl ist, insbesondere wobei die Stellgröße ein Drehmoment, ein Motorstrom oder Schaltzeitpunkt einer Pulsweitenmodulations-Schaltung ist.

3. Anlage nach mindestens einem der vorangegangenen Ansprüche,
**dadurch gekennzeichnet, dass**
die Anlage derart ausgeführt ist, dass der Drehzahlregler (1) zu jedem Zeitschritt den maximal und minimal vorgebbaren Wert **(n_max1, n_max2)** der Eingangsgröße bestimmt, insbesondere wobei ein Stellwert die Stellgrenze, insbesondere oberer und unterer Stellgrenzwert, nicht überschreitet, insbesondere wobei Zustandsgrößen des Drehzahlreglers (1), wie Integrieranteil, Istwert, Stellgrenze und dergleichen, berücksichtigt werden.

4. Anlage nach mindestens einem der vorangegangenen Ansprüche,
**dadurch gekennzeichnet, dass**
die Anlage derart ausgeführt ist, dass zu jedem Zeitschritt der vom Drehzahlregler (1) bestimmte, maximal und minimal vorgebbare Wert **(n_max1, n_max2)** der Eingangsgröße an zumindest einen Sollwertbegrenzer (22) zumindest eines anderen Antriebs übermittelt wird.

5. Anlage nach mindestens einem der vorangegangenen Ansprüche,
**dadurch gekennzeichnet, dass**
vom Sollwertbegrenzer (22) Mittel zum Prädiktieren für alle diejenigen dem Sollwertbegrenzer (22) zugeführten Werte vorgesehen sind, die mittels der Datenübertragungsmittel zugeführt sind.

6. Anlage nach mindestens einem der vorangegangenen Ansprüche,
**dadurch gekennzeichnet, dass**
der Regelkreis den Drehzahlregler (1) und eine Regelstrecke umfasst, die den Elektromotor umfasst, wobei mittels eines Winkelsensors die Istlage einer Welle des Antriebs, insbesondere Rotorwelle, erfasst wird.

7. Verfahren zum Lageregeln von Antrieben einer Anlage,
die zumindest zwei geregelte Antriebe umfasst, umfassend je einen umrichtergespeisten Elektromotor,
wobei jeder Antrieb und ein jeweils dazu gehöriger Drehzahlregler (1) von einem Regelkreis umfasst ist, wobei dem Drehzahlregler (1) eine Eingangsgröße zugeführt wird,
**wobei** ein Drehzahl-Sollwert **(n_Soll)** jeweiligen Sollwertbegrenzern (22) der Antriebe vorgegeben wird,
**dadurch gekennzeichnet, dass**
die dem gleichen Zeitschritt zugehörigen **Lage-Istwerte (β_Ist1, β_Ist2) aller Antriebe** einem jeweiligen Ausgleichsregler (20) über Zeitverzögerungsglieder (21) zeitverzögert zugeführt werden, wobei der Ausgangswert des jeweiligen Lageausgleichsreglers (20) auf den Ausgangswert des jeweiligen Sollwertbegrenzers (22) aufaddiert wird und das Ergebnis dem Drehzahlregler (1) als Eingangsgröße zugeführt wird,
**wobei der jeweilige Sollwertbegrenzer** (22) als Eingangsgrößen die maximal (n_max1, n_max2) und minimal **(n_min1, n_min2) erlaubten Werte für die Drehzahlsollwertvorgabe aller Antriebe und den Drehzahlsollwert (n_Soll) aufweist, wobei der jeweilige Sollwertbegrenzer (22) den Drehzahlsollwert (n_Soll) derart begrenzt, dass der Ausgangswert (n_SollLim1, n_sollLim2) des Sollwertbegrenzers (22)**
- **den kleineren aller dem Sollwertbegrenzer (22) zugeführten maximal vorgebbaren Werte (n_max1, n_max2) nicht überschreitet und**
- **den größeren aller dem Sollwertbegrenzer (22) zugeführten minimal vorgebbaren Werte (n_min1, n_min2) nicht unterschreitet,**
**wobei die Antriebe sich gegenseitig die zum jeweiligen Antrieb gehörenden Eingangsgrößen der Sollwertbegrenzer (22) und der Lageausgleichsregler (20) über eine Datenübertragungskomponente (25) zeitverzögert übertragen zuführen, so dass die Werte der zeitverzögert zugeführten Größen dem gleichen Zeitschritt zugeordnet sind und die Drehzahlregler (1) der Antriebe entsprechende Eingangsgrößen erhalten.**

8. Verfahren nach Anspruch 7,
**dadurch gekennzeichnet, dass**
die von Datenübertragungsmitteln übertragenen Istwerte Verzögerungsmitteln zugeführt werden zur Erzeugung der Istwerte aus dem gleichen Zeitschritt.

9. Verfahren nach einem der Ansprüche 7 bis 8,
**dadurch gekennzeichnet, dass**
der Regler (1) zu jedem Zeitschritt den maximal und minimal vorgebbaren Wert der Eingangsgröße bestimmt, insbesondere wobei ein Stellwert die Stellgrenze, insbesondere oberer und unterer Stellgrenzwert, nicht überschreitet, insbesondere wobei Zustandsgrößen des Drehzahlreglers (1), wie Integrieranteil, Istwert, Stellgrenze und dergleichen, berücksichtigt werden.

10. Verfahren nach einem der Ansprüche 7 bis 9,
**dadurch gekennzeichnet, dass**
zu jedem Zeitschritt der vom Drehzahlregler (1) bestimmte, maximal und minimal vorgebbare Wert der Eingangsgröße **(n_min1, n_min2)** an zumindest einen Sollwertbegrenzer (22) zumindest eines anderen Antriebs übermittelt wird.

11. Verfahren nach einem der Ansprüche 7 bis 10,
**dadurch gekennzeichnet, dass**
alle diejenigen dem Sollwertbegrenzer (22) zugeführten Werte prädiktiert werden, die mittels der Datenübertragungsmittel zugeführt sind.

12. Verfahren nach einem der Ansprüche 7 bis 11,
**dadurch gekennzeichnet, dass**
der Regelkreis den Drehzahlregler (1) und eine Regelstrecke umfasst, die den Elektromotor umfasst, wobei mittels eines Winkelsensors die Istlage einer Welle des Antriebs, insbesondere Rotorwelle, erfasst wird.

## Claims

1. System, comprising at least two controlled drives, each comprising a converter-fed electric motor,
wherein each drive and a respectively associated speed controller (1) are comprised by a control loop, the speed controller (1) being feedable with an input variable,
wherein means for inputting a speed setpoint (n_setpoint) are provided, the means being connected to respective setpoint limiters (22),
wherein means for determining the instantaneous position values (β_actual1,β_actual2), associated with the same time step, of all drives are provided,
**characterised in that**
means are provided for feeding the instantaneous position values (β_actual1,β_actual2) of all drives to a respective position compensating controller (20), the instantaneous position values (α_actuall, β_actual2) associated with the respective drive being fed, with a time delay via time-delay elements (21), whereby means are provided for adding the output value of the respective position compensating controller (20) to the output value of the respective setpoint limiter (22) and for feeding the result to the speed controller (1) as an input variable,
wherein the respective setpoint limiter (22) has as input variables the maximum (n_max1, n_max2) and minimum (n_min1, n_min2) allowed values for the speed setpoint input of all drives and the speed setpoint (n_setpoint),
wherein the respective setpoint limiter (22) limits the speed setpoint (n_setpoint) such that the output value (n_setpointlim1, n_setpointlim2) of the setpoint limiter (22)
- does not exceed the smaller of all maximum inputtable values (n_max1, n_max2) fed to the setpoint limiter (22) and
- does not fall below the greater of all minimum inputtable values (n_min1, n_min2) fed to the setpoint limiter (22),
wherein the drives feed one another the input variables, associated with the respective drive, of the setpoint limiters (22) and of the position compensating controllers (20) in a manner transmitted with a time delay via a data transmission component (25), so that the values of the variables fed with a time delay are assigned to the same time step and the speed controllers (1) of the drives receive corresponding input variables.

2. System according to Claim 1,
**characterised in that**
the instantaneous value (β_actual1, β_actual2) is the angular position of a shaft, in particular rotor shaft of the electric motor, of the drive or the speed derived therefrom, in particular where the manipulated variable is a torque, a motor current or switching instant of a pulse-width modulation circuit.

3. System according to at least one of the preceding claims,
**characterised in that**
the system is implemented such that the speed controller (1) determines at each time step the maximum and minimum inputtable value (n_max1, n_max2) of the input variable, in particular wherein a control output does not exceed the output limit, in particular upper and lower output limit value, in particular wherein state variables of the speed controller (1), such as integrating portion, actual value, output limit and the like are taken into account.

4. System according to at least one of the preceding claims,
**characterised in that**
the system is implemented such that at each time step the maximum and minimum inputtable value (n_max1, n_max2) of the input variable, which value is determined by the speed controller (1), is transmitted to at least one setpoint limiter (22) of at least one other drive.

5. System according to at least one of the preceding claims,
**characterised in that**
there are provided by the setpoint limiter (22) means for predicting for all those values which are fed to the setpoint limiter (22) and which are fed by means of the data transmission means.

6. System according to at least one of the preceding claims,
**characterised in that**
the control loop comprises the speed controller (1) and a controlled system which comprises the electric motor, the instantaneous position of a shaft of the drive, in particular rotor shaft, being detected by means of an angle sensor.

7. Method for position control of drives of a system,
which system comprises at least two controlled drives, each comprising a converter-fed electric motor,
wherein each drive and a respectively associated speed controller (1) are comprised by a control loop, the speed controller (1) being fed with an input variable,
wherein a speed setpoint (n_setpoint) is input into respective setpoint limiters (22) of the drives,
**characterised in that**
the instantaneous position values (β_actual1, β_actual2), associated with the same time step, of all drives are fed with a time delay via time-delay elements (21) to a respective compensating controller (20), the output value of the respective position compensating controller (20) being added to the output value of the respective setpoint limiter (22) and the result being fed to the speed controller (1) as an input variable,
wherein the respective setpoint limiter (22) has as input variables the maximum (n_max1, n_max2) and minimum (n_min1, n_min2) allowed values for the speed setpoint input of all drives and the speed setpoint (n_setpoint),
wherein the respective setpoint limiter (22) limits the speed setpoint (n_setpoint) such that the output value (n_setpointlim1, n_setpointlim2) of the setpoint limiter (22)
- does not exceed the smaller of all maximum inputtable values (n_max1, n_max2) fed to the setpoint limiter (22) and
- does not fall below the greater of all minimum inputtable values (n_min1, n_min2) fed to the setpoint limiter (22),
wherein the drives feed one another the input variables, associated with the respective drive, of the setpoint limiters (22) and of the position compensating controllers (20) in a manner transmitted with a time delay via a data transmission component (25), so that the values of the variables fed with a time delay are assigned to the same time step and the speed controllers (1) of the drives receive corresponding input variables.

8. Method according to Claim 7,
**characterised in that**
the instantaneous values transmitted by data transmission means are fed to time-delay means for the purpose of generating the actual values from the same time step.

9. Method according to one of Claims 7 to 8,
**characterised in that**
the controller (1) determines at each time step the maximum and minimum inputtable value of the input variable, in particular wherein a control output does not exceed the output limit, in particular upper and lower output limit value, in particular wherein state variables of the speed controller (1), such as integrating portion, instantaneous value, output limit and the like are taken into account.

10. Method according to one of Claims 7 to 9,
**characterised in that**
at each time step the maximum and minimum inputtable value of the input variable (n_min1, n_min2), which value is determined by the speed controller (1), is transmitted to at least one setpoint limiter (22) of at least one other drive.

11. Method according to one of Claims 7 to 10,
**characterised in that**
all those values which are fed to the setpoint limiter (22) and which are fed by means of the data transmission means are predicted.

12. Method according to one of Claims 7 to 11,
**characterised in that**
the control loop comprises the speed controller (1) and a controlled system which comprises the electric motor, the instantaneous position of a shaft of the drive, in particular rotor shaft, being detected by means of an angle sensor.

## Revendications

1. Installation, comprenant au moins deux entraînements régulés, comprenant chacun un moteur électrique alimenté par variateur de vitesse,
chaque entraînement et un régulateur de vitesse de rotation (1) associé étant compris par une boucle d'asservissement, une grandeur d'entrée pouvant être amenée au régulateur de vitesse de rotation (1),
des moyens étant prévus pour entrer une valeur de consigne de vitesse de rotation (n_soll), lesquels sont reliés à des limiteurs de valeur de consigne (22) respectifs,
des moyens étant prévus pour déterminer les valeurs réelles de position (β_Ist1, β_Ist2) associées au même incrément de temps de tous les entraînements,
**caractérisée en ce que**
des moyens sont prévus pour amener les valeurs réelles de position (β_Ist1, β_Ist2) de tous les entraînements à un régulateur de compensation de position (20) respectif, les valeurs réelles de position (β_Ist1, β_Ist2) correspondant à l'entraînement respectif étant amenées avec un retard par l'intermédiaire d'éléments à retard (21), des moyens étant prévus pour additionner la valeur de départ du régulateur de compensation de position (20) respectif à la valeur de départ du limiteur de valeur de consigne (22) respectif et pour amener le résultat comme grandeur d'entrée au régulateur de vitesse de rotation (1),
le limiteur de valeur de consigne (22) respectif présentant comme grandeurs d'entrée les valeurs maximum (n_max1, n_max2) et minimum (n_min1, n_min2) autorisées pour la valeur de consigne de vitesse de rotation prescrite de tous les entraînements et la valeur de consigne de vitesse de rotation (n_soll),
le limiteur de valeur de consigne (22) respectif limitant la valeur de consigne de vitesse de rotation (n_soll) de façon que la valeur de départ (n_sollLim1, n_sollLim2) du limiteur de valeur de consigne (22)
- ne soit pas supérieure à la plus petite de toutes les valeurs maximum prescriptibles (n_max1, n_max2) amenées au limiteur de valeur de consigne (22) et
- ne soit pas inférieure à la plus grande de toutes les valeurs minimum prescriptibles (n_min1, n_min2) amenées au limiteur de valeur de consigne (22),
les entraînements se transmettant mutuellement avec un retard les grandeurs d'entrée des limiteurs de valeur de consigne (22) et des régulateurs de compensation de position (20) correspondant à l'entraînement respectif par l'intermédiaire d'un composant de transmission de données (25), de façon que les valeurs des grandeurs amenées avec un retard soient associées au même incrément de temps et que les régulateurs de vitesse de rotation (1) des entraînements reçoivent des grandeurs d'entrée correspondantes.

2. Installation selon la revendication 1,
**caractérisée en ce que**
la valeur réelle (β_Ist1, β_Ist2) est la position angulaire d'un arbre, en particulier l'arbre de rotor du moteur électrique, de l'entraînement ou la vitesse de rotation qui en découle, en particulier la grandeur réglante étant un couple, un courant de moteur ou un instant de commutation d'un circuit de modulation de largeur d'impulsion.

3. Installation selon au moins une des revendications précédentes,
**caractérisée en ce que**
l'installation est réalisée de façon que le régulateur de vitesse de rotation (1) détermine à chaque incrément de temps la valeur maximum et minimum prescriptible (n_max1, n_max2) de la grandeur d'entrée, en particulier une valeur de réglage ne dépassant pas la limite de réglage, en particulier la valeur limite de réglage supérieure et inférieure, en particulier des grandeurs d'état du régulateur de vitesse de rotation (1) telles que composante d'intégration, valeur réelle, limite de réglage et analogues étant prises en compte.

4. Installation selon au moins une des revendications précédentes,
**caractérisée en ce que**
l'installation est réalisée de façon qu'à chaque incrément de temps, la valeur maximum et minimum prescriptible (n_max1, n_max2) de la grandeur d'entrée déterminée par le régulateur de vitesse de rotation (1) est transmise à au moins un limiteur de valeur de consigne (22) d'au moins un autre entraînement.

5. Installation selon au moins une des revendications précédentes,
**caractérisée en ce que**
avant le limiteur de valeur de consigne (22) sont prévus des moyens de prédiction pour toutes les valeurs amenées au limiteur de valeur de consigne (22) qui sont amenées au moyen des moyens de transmission de données.

6. Installation selon au moins une des revendications précédentes,
**caractérisée en ce que**
la boucle d'asservissement comprend le régulateur de vitesse de rotation (1) et un circuit de régulation qui comprend le moteur électrique, la position réelle d'un arbre de l'entraînement, en particulier de l'arbre de rotor, étant détectée au moyen d'un capteur d'angle.

7. Procédé pour réguler la position d'entraînements d'une installation,
qui comprend au moins deux entraînements régulés, comprenant chacun un moteur électrique alimenté par variateur de vitesse,
chaque entraînement et un régulateur de vitesse de rotation (1) associé étant compris par une boucle d'asservissement, une grandeur d'entrée pouvant être amenée au régulateur de vitesse de rotation (1),
une valeur de consigne de vitesse de rotation (n_soll) étant prescrite aux limiteurs de valeur de consigne (22) respectifs des entraînements,
**caractérisé en ce que**
les valeurs réelles de position (β_Ist1, β_Ist2) associées au même incrément de temps de tous les entraînements sont amenées à un régulateur de compensation (20) respectif par l'intermédiaire d'éléments à retard (21), la valeur de départ du régulateur de compensation de position (20) respectif étant additionnée à la valeur de départ du limiteur de valeur de consigne (22) respectif et le résultat étant amené comme grandeur d'entrée au régulateur de vitesse de rotation (1),
le limiteur de valeur de consigne (22) respectif présentant comme grandeurs d'entrée les valeurs maximum (n_max1, n_max2) et minimum (n_min1, n_min2) autorisées pour la valeur de consigne de vitesse de rotation prescrite de tous les entraînements et la valeur de consigne de vitesse de rotation (n_soll),
le limiteur de valeur de consigne (22) respectif limitant la valeur de consigne de vitesse de rotation (n_soll) de façon que la valeur de départ (n_sollLim1, n_sollLim2) du limiteur de valeur de consigne (22)
- ne soit pas supérieure à la plus petite de toutes les valeurs maximum prescriptibles (n_max1, n_max2) amenées au limiteur de valeur de consigne (22) et
- ne soit pas inférieure à la plus grande de toutes les valeurs minimum prescriptibles (n_min1, n_min2) amenées au limiteur de valeur de consigne (22),
les entraînements se transmettant mutuellement avec un retard les grandeurs d'entrée des limiteurs de valeur de consigne (22) et des régulateurs de compensation de position (20) correspondant à l'entraînement respectif par l'intermédiaire d'un composant de transmission de données (25), de façon que les valeurs des grandeurs amenées avec un retard soient associées au même incrément de temps et que les régulateurs de vitesse de rotation (1) des entraînements reçoivent des grandeurs d'entrée correspondantes.

8. Procédé selon la revendication 7,
**caractérisé en ce que**
les valeurs réelles transmises par les moyens de transmission de données sont amenées à des moyens de retard pour générer les valeurs réelles provenant du même incrément de temps.

9. Procédé selon une des revendications 7 à 8,
**caractérisé en ce que**
le régulateur (1) détermine à chaque incrément de temps la valeur maximum et minimum prescriptible de la grandeur d'entrée, en particulier une valeur de réglage ne dépassant pas la limite de réglage, en particulier la valeur limite de réglage supérieure et inférieure, en particulier des grandeurs d'état du régulateur de vitesse de rotation (1) telles que composante d'intégration, valeur réelle, limite de réglage et analogues étant prises en compte.

10. Procédé selon une des revendications 7 à 9,
**caractérisé en ce que**
à chaque incrément de temps, la valeur maximum et minimum prescriptible de la grandeur d'entrée (n_min1, n_min2) déterminée par le régulateur de vitesse de rotation (1) est transmise à au moins un limiteur de valeur de consigne (22) d'au moins un autre entraînement.

11. Procédé selon une des revendications 7 à 10,
**caractérisé en ce que**
toutes les valeurs amenées au limiteur de valeur de consigne (22), qui sont amenées au moyen des moyens de transmission de données, sont prédites.

12. Procédé selon une des revendications 7 à 11,
**caractérisé en ce que**
la boucle d'asservissement comprend le régulateur de vitesse de rotation (1) et un circuit de régulation qui comprend le moteur électrique, la position réelle d'un arbre de l'entraînement, en particulier de l'arbre de rotor, étant détectée au moyen d'un capteur d'angle.
